# EUROPEAN PATENT SPECIFICATION

(11) **EP 0 581 310 B1**
(45) Date of publication and mention of the grant of the patent: **08.10.1997**
(21) Application number: 93112264.2
(22) Date of filing: 30.07.1993
(51) Int. Cl.: B62K 19/46

(54) **Luggage box for motorcycle**
Gepäckbehälter für Motorrad
Boîte de bagage pour motocyclette

(30) Priority: 31.07.1992 JP 204789/92
(43) Date of publication of application: 02.02.1994
(73) Proprietor: YAMAHA HATSUDOKI KABUSHIKI KAISHA, Iwata-shi Shizuoka-ken (JP)
(72) Inventor: Akao, Takuya, c/o Yamaha Motor Co., Ltd., Iwata-shi, Shizuoka-ken (JP); Suzuki, Tatsuya, c/o Yamaha Motor Co., Ltd., Iwata-shi, Shizuoka-ken (JP)
(74) Representative: Grünecker, Kinkeldey, Stockmair & Schwanhäusser Anwaltssozietät

(56) References cited:
- EP-A- 0 303 408
- EP-A- 0 463 942
- FR-A- 2 131 451
- US-A- 4 697 664
- US-A- 5 020 847

## Description

The invention relates to a motorcycle with a luggage box located under the seat of the motorcycle, wherein a first portion of the bottom wall of said luggage box, with respect to the direction of said motorcycle, is made flat, and that a second portion of said bottom wall is made spherical to follow the external shape of crash helmets.

Small-sized scooter-type motorcycles in particular are provided with a luggage box below the seat for stowing mainly a crash helmet.

Since auxiliary components for the engine such as the carburetor and others are located under the seat, the luggage box of conventional structure is formed with part of its bottom deformed upward to avoid interference with the auxiliary components, or the auxiliary components are laid out on the right and the left so that the shape of the luggage box takes a hemispherical shape with the center of its bottom being the lowest.

Another shape of conventional luggage box is that the bottom is raised to a level capable of avoiding interference with the auxiliary components so that the bottom is made flat.

However, it is undesirable to deform part of the bottom of the luggage box upward, as practiced in the past to avoid interference with the auxiliary components, because such a shape decreases the stowing volume of the luggage box.

It is also disadvantageous to make the luggage box bottom in the shape of a hemisphere, because the luggage box of such a shape would only accommodate an object of a hemispherical shape well, such as the crash helmet.

Furthermore, if the luggage box bottom is made flat, the crash helmet or the like is not stowed in a stable, securely-held condition, and rattles.

A motorcycle as mentioned above is already known from document EP-A-0 303 408. In this case, the crash helmet is stowed in the luggage box such that the flat neck portion of the helmet is adapted to a sloped flat bottom wall portion of the luggage box. Thus, a rounded upper portion of the helmet is disposed adjacent to a seat bottom wall of the motorcycle.

The object of the invention is to provide a motorcycle within a luggage box as indicated above capable of providing a large stowing space, while eliminating rattle by stowing the crash helmet in a securely-held condition.

This object is solved by a motorcycle with a luggage box as mentioned above, which is improved in that a shallow, generally horizontal, planar portion is formed in a front wall of said luggage box. Thus, large stowing space is provided within the luggage box.

Since part of the luggage box bottom (half, with respect to the vehicle width direction) is made hemispherical to follow the external shape of the crash helmet, the crash helmet is stowed in the luggage box in a securely-held condition and does not rattle. Since the space below the hemispherical part is larger than the space below the flat part of the luggage box bottom, the auxiliary components are laid out reasonably well below the hemispherical part.

Since the remaining half portion of the luggage box bottom is formed flat, the space in the luggage box is larger than that provided by conventional luggage boxes.

Further advantages and embodiments of the present invention are laid down by the further subclaims.

Embodiments of the invention are described below in reference to the attached drawings.
Figure 1 is a front elevational cross-section of a luggage box for a motorcycle,
Figure 2 is a front view of the luggage box, partially broken away,
Figure 3 is a side view of the luggage box, partially broken away,
Figure 4 is a perspective partial view showing part of a structure for a crash helmet hanger,
Figure 5 is a partial front elevational cross-section of Figure 4,
Figure 6 is a side view of a scooter-type motorcycle,
Figure 7 is a partial plan view of the scooter-type motorcycle, and
Figure 8 is a perspective view of a chassis frame of the scooter-type motorcycle.

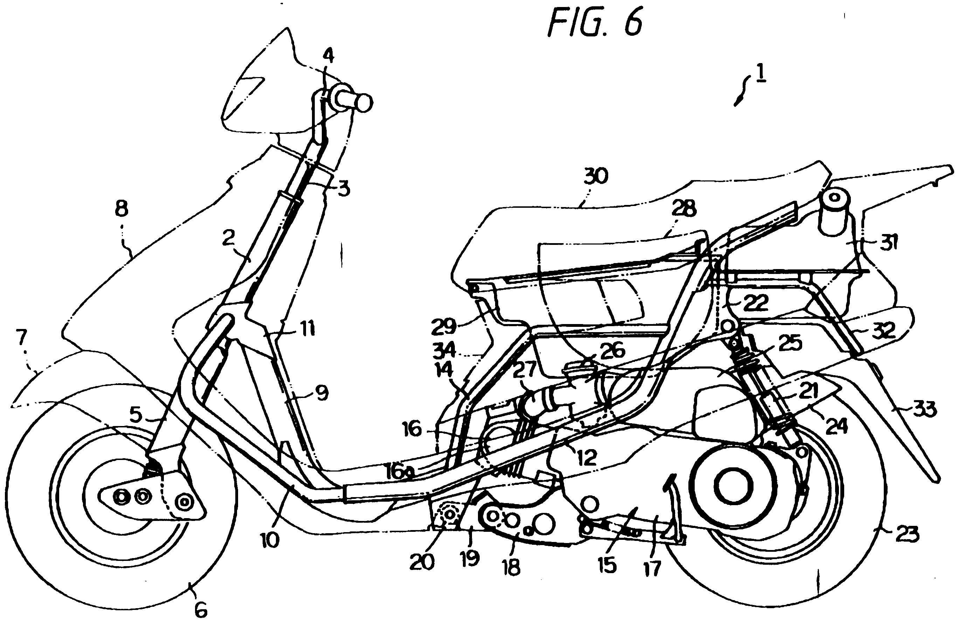

The structure of the scooter-type motorcycle is roughly described in reference to Figures 6 through 8.

In Figure 6, a steering shaft 3 is freely rotatably inserted into a head pipe 2. Handlebars 4 are connected to the top of the steering shaft 3. A front wheel 6 is freely rotatably supported with a shaft and connected through a front suspension unit 5 to the bottom of the head pipe 2. A front fender 7 and a front cowl 8 are also shown in Figure 6.

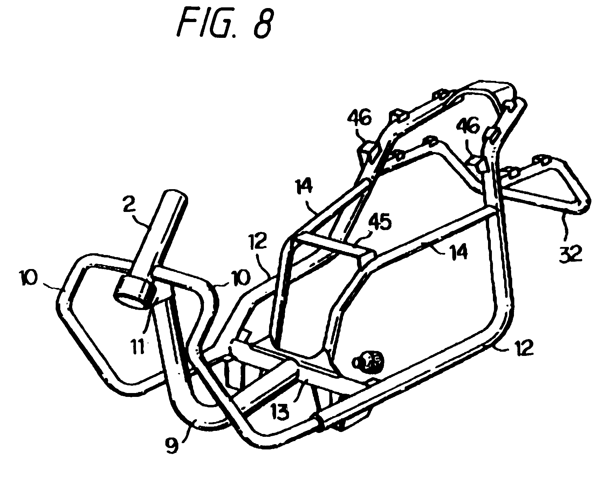

As shown in Figure 8, a down tube 9 and two side tubes 10 extend back downward from the lower part of the head pipe 2.

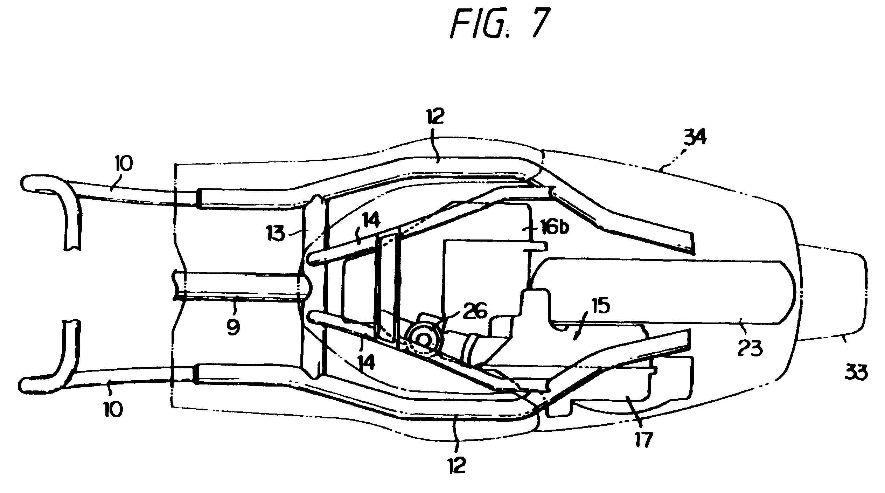

Namely, the down tube 9 is located in the center of the vehicle width with its one (front) end being inserted into and welded to a joint 11 connected to the lower part of the head pipe 2. The down tube 9, as shown in Figures 7 and 8, extends obliquely downward from the joint 11 and its rear end is connected to the center, with respect to the vehicle width, of a cross pipe 39, which will be described later.

The two side tubes 10 are arranged on both sides of the down tube 9 with one (front) end of each pipe being inserted into and welded to the side of the joint 11. Each of the side tubes 10 extends generally horizontally sideways outward from the joint 11, is bent about 90 degrees to extend obliquely down forward, is bent again about 90 degrees to extend obliquely down backward, is bent at an obtuse angle to extend obliquely back upward, and its rear end is inserted into and secured to the front end of one of main frames 12.

Each of the paired main frames 12 extends obliquely back upward, is bent to steeply rise up, and is bent again to extend obliquely back upward. As shown in Figures 7 and 8, a cross pipe 13 is laterally arranged between both main frames 12. Reinforcing side tubes 14 are arranged between the cross pipe 13 and the main frames 12.

The motorcycle 1 is provided with a unit swing type engine 15 as a drive power source. An engine unit 16 of the unit swing type engine 15 comprises an almost horizontally tilted cylinder 16a and a crankcase 16b. The crankcase 16b includes an integral transmission case 17. One end of the unit swing type engine 15 is connected to and suspended by a bracket 20 located on the chassis side by way of right and left paired brackets 18 located on the engine side, links 19 each pivoted to each of the brackets 18, and brackets 20 connected to the cross pipe 13 and located on the chassis side. The other (rear) end of the unit swing type engine 15 is connected to and suspended by a bracket (22) connected to the main frames 12 by way of rear suspension unit 21.

An output shaft (rear axle, not shown) extends horizontally inward from the rear part of the transmission case 17 of the unit swing type engine 15. A rear wheel 23 is installed on the output shaft. The upper part of the rear wheel 23 is covered with a rear fender 24.

An air cleaner 25 is attached to the transmission case 17 of the unit swing type engine 15 so that the air cleaner 25 is located on a side of the rear fender 24. A carburetor 26 is connected to the air cleaner 25 and, by way of a suction tube 27, to the intake side of the cylinder 16a.

As shown in Figure 6, a luggage box 29, a seat 30, and a fuel tank 31 are arranged above the unit swing type engine 15. The fuel tank 31 is mounted on a rectangular support frame 32 extending backward from the main frame 12. A license bracket 33 is attached to a location below the fuel tank 31. The area below the seat 30 is covered with an external cover 34.

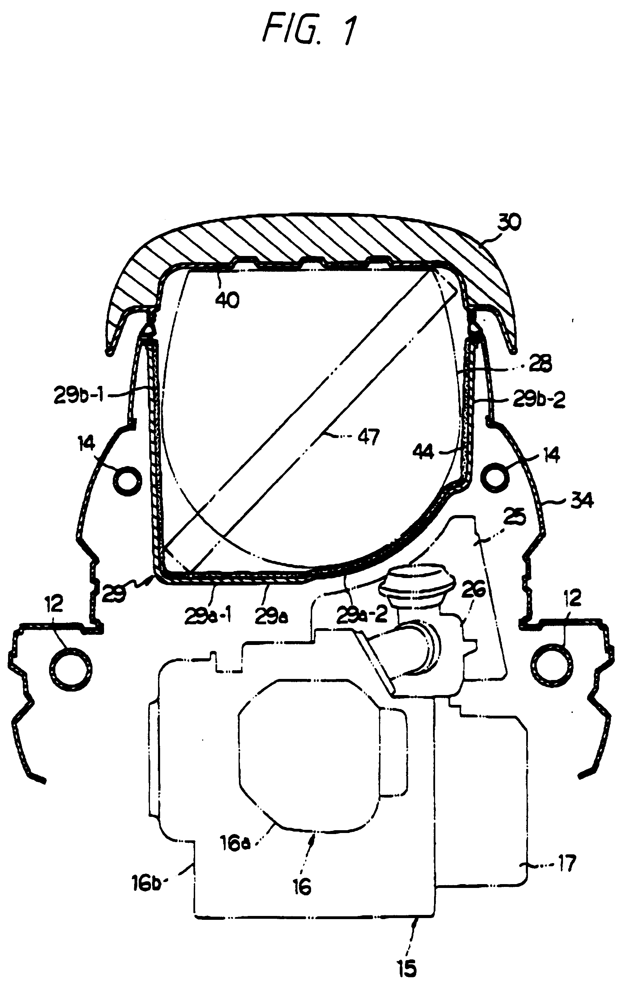

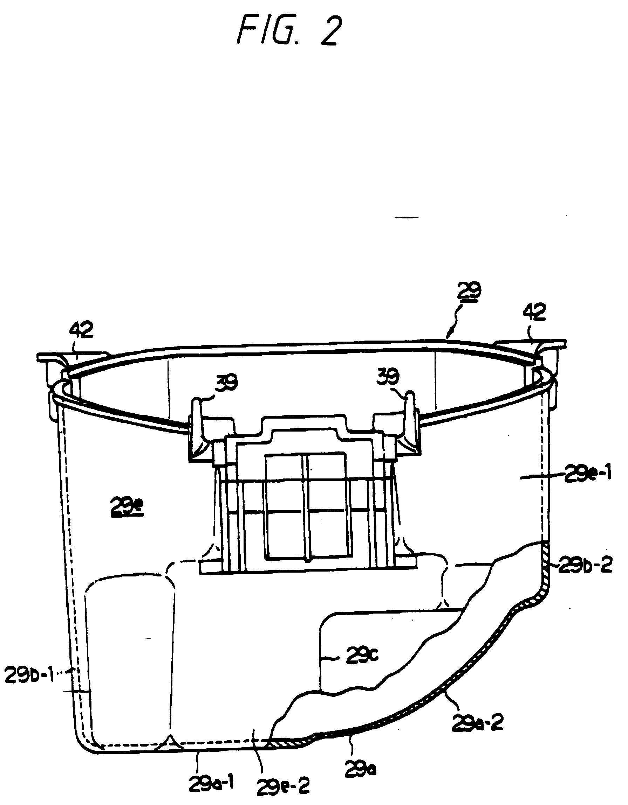

The structure of the luggage box 29 of the invention is now described in detail in reference to Figures 1 through 5.

As shown in Figure 1, the luggage box 29 is located below the seat 30. The unit swing type engine 15 is located below the luggage box.

The luggage box 29 is formed integrally in a rectangular box shape with its top open. The right and left halves of the bottom 29a of the luggage box 29 (with respect to the vehicle width direction) have respectively different shapes.

Namely, the left half 29a-1 of the bottom 29a as seen on the front elevational view (the left half in Figure 1) is formed flat, while the right half 29a-2 (the right half in Figure 1) is formed hemispherically to follow the external shape of a crash helmet 28.

Therefore, the luggage box 29 has a high vertical side wall 29b-1 continuing to the planar left half 29a-1, a low vertical wall 29b-2 continuing to the hemispherical right half 29a-2, and a vertical wall 29c formed with the forward part of the right half 29a-2. The rear wall 29d of the luggage box 29 is made up of a wide portion 29d-1 extending across the entire width and a narrow sloped portion 29d-2 connecting the portion 29d-1 to the left half 29a-1 of the bottom 29a.

The front wall 29e of the luggage box 29 is made up of a stepped wide portion 29e-1 extending across the entire width and a sloped portion 29e-2 connecting the portion 29e-1 to the left half 29a-1 of the bottom 29a. A shallow, generally horizontal, planar portion 29e-3 is formed on the wide portion 29e-1 of the front wall 29e and is provided with an attachment hole 35.

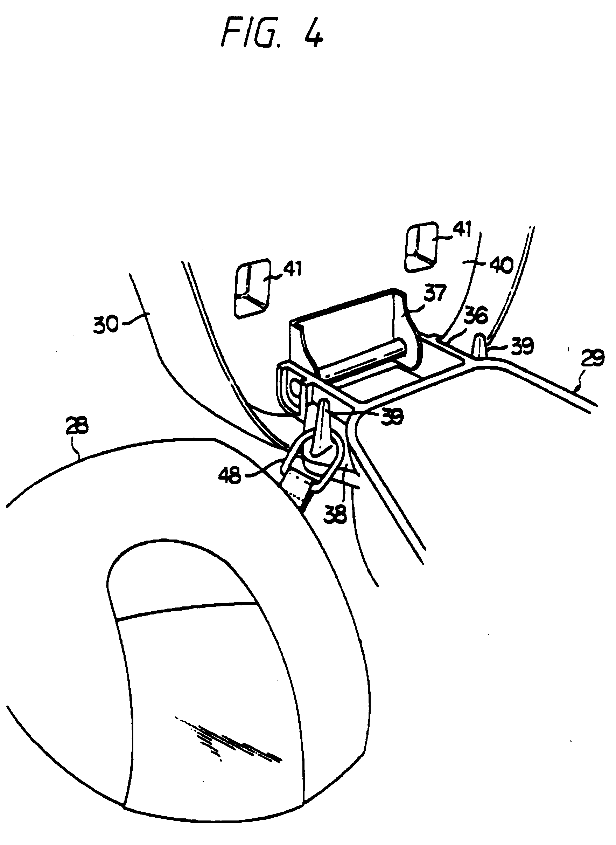

A seat attachment portion 36 is formed integrally with the front part of the opening of the luggage box 29. As shown in Figure 4, the front end portion of the seat 30 is freely rotatably attached to the seat attachment portion 36 by means of a hinge 37.

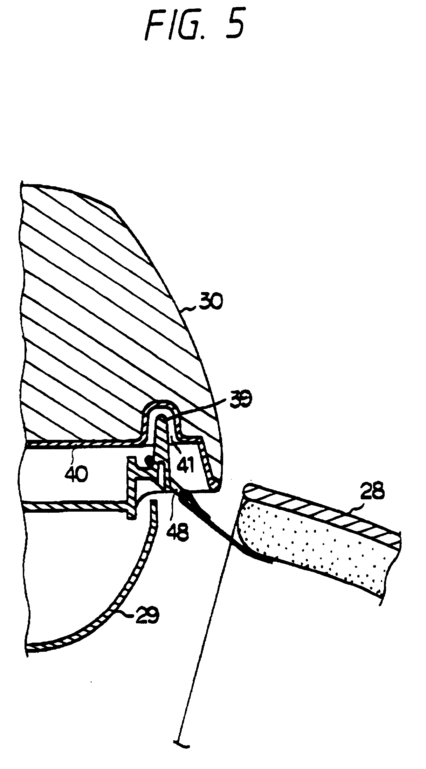

As shown Figure 4, seat surfaces 38 sloping obliquely outward are formed integrally with, and on both sides of, the seat attachment portion 36. Each of the seat surfaces 38 is provided with a rod-shaped hanger 39 erected upright. Right and left paired recesses 41 are formed on a bottom plate 40 of the seat 30, so that the hangers 39 enter the recess 41 when the seat 30 is folded (refer to Figure 5).

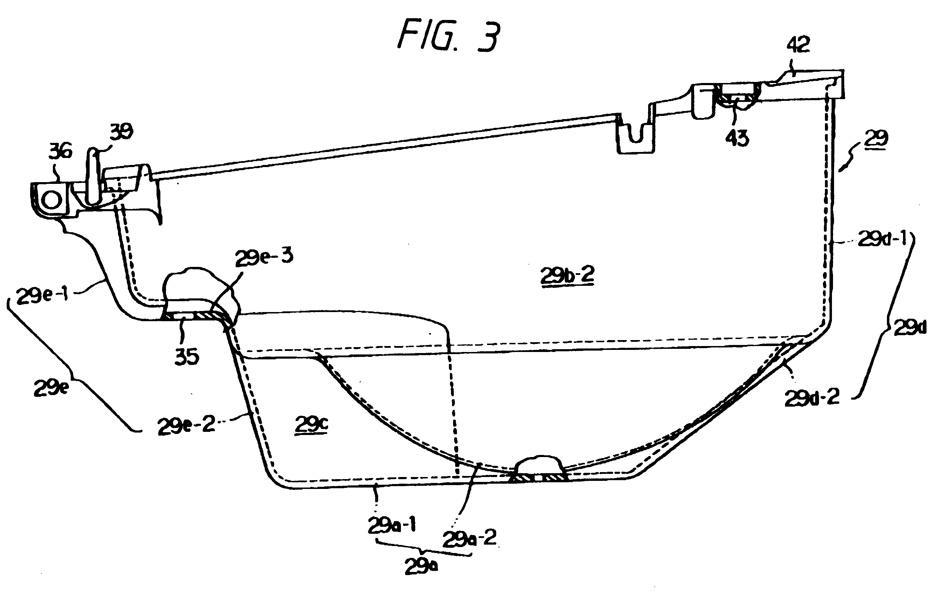

Right and left paired flanges 42 are integrally formed on the rear brim of the opening of the luggage box 29. As shown in Figure 3, each of the flanges 42 is provided with an attachment hole 43.

A cushion material 44 made of nonwoven fabric is applied to the inner surface of the luggage box 29 so that the external surface of the crash helmet 28 is protected from damage.

As shown in Figure 8, an attachment plate 45 is laterally arranged between the paired side frames 14, and a bracket 46 is secured to the rear ends of the main frames 12.

The flat portion 29e-3 of the luggage box 29 is secured to the attachment plate 45 by means of a bolt (not shown) inserted in the attachment hole 35 drilled in the flat portion. The flange 42 is secured to the bracket 46 by means of a bolt (not shown) inserted in the attachment hole 43 drilled in the flange. Thus, the luggage box 29 is attached to a chassis frame to bear part of the load of the seat 30.

As described above, according to this embodiment, since the right half 29a-2 of the bottom 29a of the luggage box 29 is formed to follow the external shape of the crash helmet 28 (as shown in Figure 1), the crash helmet 28 is stowed in a securely-held condition to the luggage box 29 (in particular to the right half 29a-2 of the bottom 29a), and does not rattle in the luggage box 29.

As shown in Figure 1, since the space below the right half 29a-2 of the luggage box bottom 29a is larger than that below the other half, a rational layout of auxiliary components, such as the air cleaner 25 and the carburetor 26, is possible if they are arranged in that space. Cable harnesses (not shown) are routed through a space below the flat half 29a-1 of the luggage box bottom 29a.

Because of the flat shape of the left half 29a-1 of the luggage box bottom 29a, a space larger than the space in a conventional structure is provided. As a result, a long-sized object 47 (shown in Figure 1) can be stowed.

As shown in Figure 4, with the condition of the seat 30 being unfolded, the hanger 39 is provided integrally with the luggage box 29 being exposed. Therefore, the crash helmet 28 can be hung on the hanger 39 by hooking a metallic piece 48 of the crash helmet 28 on the hanger 39. If the seat 30 is folded from that condition (as shown in Figure 5), the hanger 39 fits into the recess 41 formed in the bottom plate 40 of the seat 30 and, therefore, the crash helmet 28 cannot be removed. This is an advantage for preventing theft of the crash helmet. In addition, since the seat surface 38 on which the hanger 39 is erected is sloped outward downward, the crash helmet 28 can be smoothly hooked. Furthermore, even if the plastic hanger 39 is deformed by hooking the crash helmet 28, the deformation is restricted by the recess 30 on the seat 30 side. This supplements rigidity of the hanger 39.

As is clear from the description above, according to the invention, since half of the bottom of the luggage box (with respect to the vehicle width) located under the seat of the motorcycle is made flat, and the remaining portion is made spherical to follow the external shape of the crash helmet, an effect is attained that a large stowage space is provided in the luggage box and, at the same time, the crash helmet can be stowed in a securely-held condition in the luggage box without rattle.

## Claims

1. A motorcycle with a luggage box (29) located under the seat (30) of the motorcycle wherein a first portion (29a-1) of the bottom wall (29) of said luggage box (29), with respect to the width direction of said motorcycle, is made flat, and a second portion (29a-2) of said bottom wall (29a) is made spherical to follow the external shape of crash helmets (28) **characterised by** a shallow, generally horizontal, planar portion which is formed in a front wall (29e) of said luggage box (29).

2. A motorcycle according to claim 1, **characterised in that** said first and second portions (29a-1;29a-2) correspond to the half of the total width of the bottom wall (29a) respectively.

3. A motorcycle according to claim 1 or 2, **characterised in that** said first portion (29a-1) of said bottom wall (29) continues to a high vertical side wall (29b-1), said second portion (29a-2) of said bottom wall (29) continues to a low vertical side wall (29b-2), and that further, a rear wall (29d) and said front wall (29e) are provided for defining a luggage box having a substantially rectangular box shape.

4. A motorcycle according to claim 3, **characterised in that** said rear wall (29d) of the luggage box (29) is made up of a wide portion (29d-1) extending across the entire width, and a narrow sloped portion (29d-2) connecting said wide portion (29d-1) to the first portion (29a-1) of the bottom wall (29a).

5. A motorcycle according to claim 3 or 4, **characterised in that** said front wall (29e) of the luggage box (29) is made up of a stepped wide portion (29e-1) extending across the entire width, and a sloped portion (29e-2) connecting the portion (29e-1) to the first portion (29a-1) of the bottom wall (29a).

6. A motorcycle according to claim 5, **characterised in that** said shallow, generally horizontal, planar portion (29e-3) is formed on the wide portion (29e-1) of the front wall (29e) and is provided with an attachment hole (35).

7. A motorcycle according to at least one of claims 1 to 6, **characterised in that** a carburettor (26) and/or an air cleaner (25) is disposed in a space below said second spherical portion (29a-2) of said bottom wall (29a).

8. A motorcycle according to at least one of claims 1 to 7, **characterised in that** cable harnesses are routed through a space below the first portion (29a-1) of the bottom wall (29a).

9. A motorcycle according to at least one of claims 3 to 8, **characterised in that** the front wall (29e) has, at its upper portion, an attachment portion (36) for receiving a hinge (37) fixed to the seat (30) for freely rotating said seat (30) about said seat attachment portion (36).

10. A motorcycle according to claim 9, **characterised in that** said seat attachment portion (36) has seat surfaces (38), wherein at least one of said seat surfaces (38) is provided with a rod-shaped hanger (39) erected upright.

11. A motorcycle according to claim 10, **characterised in that** said seat surfaces (38) slope obliquely in an outward direction.

12. A motorcycle according to claim 10 or 11, **characterised in that** on a bottom plate (40) of the seat (30), a least one recess (49) is provided for receiving said hangers (39) when the seat (30) is folded to a horizontal position.

13. A motorcycle according to one of claims 1 or 12, **characterised in that** right and left paired flanges (42) are integrally formed on the rear brim of the opening of the luggage box (29), each of said flanges (42) is provided with an attachment hole (43).

14. A motorcycle according to one of claims 1 to 13, **characterised in that** a cushion material (44) is applied to the inner surface of the luggage box (29).

15. A motorcycle according to claim 14, **characterised in that** said cushion material (44) is made of nonwoven fabric.

16. A motorcycle according to at least one of claims 13 to 15, **characterised in that** paired main frames (12) extend obliquely back upward, are bent to steeply rise up, and are bent again to extend obliquely back upward; a cross pipe (13) is laterally arranged between both main frames (12); reinforcing side tubes (14) are arranged between the cross pipe (13) and the main frames (12), wherein an attachment plate (45) is laterally arranged between paired side frames (14) and a bracket (46) is secured to the ends of the main frames (12), the flat portion (29e-3) is secured to the attachment plate (45) by means of a bolt inserted in an attachment hole (35) disposed in said flat portion (29e-3); and that flange (42) is secured to the bracket (46) by means of a bolt inserted in said attachment hole (43) disposed in the flange (42).

17. A motorcycle according to claim 16, **characterised in that** said reinforcing side tubes (14) extend beside said side walls (29b-1;29b-2) respectively, and are covered by means of an external cover (34).

## Patentansprüche

1. Motorrad mit einem Gepäckbehälter (29), der unter dem Sitz (30) des Motorrades angeordnet ist, wobei ein erster Bereich (29a-1) der Bodenwand (29) des Gepäckbehälters (29) bezüglich zur Breitenrichtung des Motorrades eben hergestellt ist und ein zweiter Bereich (29a-2) der Bodenwand (29a) gewölbt hergestellt ist, um der äußeren Form von Sturzhelmen (28) zu folgen, **gekennzeichnet durch** einen flachen, im allgemeinen horizontalen, ebenflächigen Bereich, der in einer Vorderwand (29e) des Gepäckbehälters (29) ausgebildet ist.

2. Motorrad nach Anspruch 1, **dadurch gekennzeichnet**, daß der erste und zweite Bereich (29a-1; 29a-2) jeweils der Hälfte der Gesamtbreite der Bodenwand (29a) entspricht.

3. Motorrad nach Anspruch 1 oder 2, **dadurch gekennzeichnet**, daß der erste Bereich (29a-1) der Bodenwand (29) sich zu einer niedrigen vertikalen Seitenwand (29b-2) fortsetzt, und daß außerdem eine hintere Wand (29d) und die vordere Wand (29e) zum Begrenzen eines Gepäckbehälters vorgesehen sind, der eine im wesentliche rechteckige Behälterform aufweist.

4. Motorrad nach Anspruch 3, **dadurch gekennzeichnet**, daß die hintere Wand (29d) des Gepäckbehälters (29) aus einem breiten Bereich (29d-1) gebildet ist, der sich über die gesamte Breite erstreckt, und aus einem schmalen, abgeschrägten Bereich (29d-2) gebildet ist, der den breiten Bereich (29d-1) mit dem ersten Bereich (29a-1) der Bodenwand (29a) verbindet.

5. Motorrad nach Anspruch 3 oder 4, **dadurch gekennzeichnet**, daß die vordere Wand (29e) des Gepäckbehälters (29) durch einen abgestuften breiten Bereich (29e-1) gebildet wird, der sich über die gesamte Breite erstreckt, und durch einen abgeschrägten Bereich (29e-2) gebildet wird, der den Bereich (29e-1) mit dem ersten Bereich (29a-1) der Bodenwand (29a) verbindet.

6. Motorrad nach Anspruch 5, **dadurch gekennzeichnet**, daß der flache, im allgemeinen horizontale, ebenflächige Bereich (29e-3) auf dem breiten Bereich (29e-1) der vorderen Wand (29e) ausgebildet ist und mit einem Befestigungsloch (35) versehen ist.

7. Motorrad nach zumindest einem der Ansprüche 1 bis 6, **dadurch gekennzeichnet**, daß ein Vergaser (26) und/oder ein Luftfilter (25) in einem Raum unter dem zweiten, gewölbten Bereich (29a-2) der Bodenwand (29a) angeordnet ist.

8. Motorrad nach zumindest einem der Ansprüche 1 bis 7, **dadurch gekennzeichnet**, daß Kabelbäume durch einen Raum unterhalb des ersten Bereiches (29a-1) der Bodenwand (29a) geführt sind.

9. Motorrad nach zumindest einem der Ansprüche 3 bis 8, **dadurch gekennzeichnet**, daß die vordere Wand (29e) an ihrem oberen Bereich ein Befestigungsbereich (36) zum Aufnehmen eines Scharniers (37) aufweist, das mit dem Sitz (30) für eine freie Drehung des Sitzes (30) um den Sitzbefestigungsbereich (36) befestigt ist.

10. Motorrad nach Anspruch 9, **dadurch gekennzeichnet**, daß der Sitzbefestigungsbereich (36) Sitzflächen (38) aufweist, wobei zumindest eine der Sitzflächen (38) mit einer stabförmigen Aufhängevorrichtung (39) versehen ist, die aufrecht aufgerichtet ist.

11. Motorrad nach Anspruch 10, **dadurch gekennzeichnet**, daß die Sitzflächen (38) schräg in einer nach außen gerichteten Richtung verlaufen.

12. Motorrad nach Anspruch 10 oder 11, **dadurch gekennzeichnet**, daß auf einer Bodenplatte (40) des Sitzes (30) zumindest eine Aussparung (49) zum Aufnehmen der Aufhängevorrichtungen (39) vorgesehen ist, wenn der Sitz (30) in eine horizontale Position geklappt ist.

13. Motorrad nach einem der Ansprüche 1 bis 12, **dadurch gekennzeichnet**, daß rechte und linke paarweise angeordnete Flansche (42) integriert auf dem hinteren Rand der Öffnung des Gepäckbehälters (29) ausgebildet sind, wobei jeder der Flansche mit einem Befestigungsloch (43) versehen ist.

14. Motorrad nach einem der Ansprüche 1 bis 13, **dadurch gekennzeichnet**, daß ein Polstermaterial (44) auf die innere Fläche des Gepäckbehälters (29) aufgebracht ist.

15. Motorrad nach Anspruch 14, **dadurch gekennzeichnet**, daß das Polstermaterial (44) aus einem ungewebten Textilerzeugnis hergestellt ist.

16. Motorrad nach einem der Ansprüche 13 bis 15, **dadurch gekennzeichnet**, daß paarweise angeordnete Hauptrahmen (12) sich schräg nach hinten aufwärts erstrecken, gebogen sind, um steil anzusteigen und wiederum gebogen sind, um sich schräg nach hinten aufwärts zu erstrecken, daß ein Querrohr (13) zwischen beiden Hauptrahmen (12) quer angeordnet ist, daß verstärkende Seitenrohre (14) zwischen dem Querrohr (13) und den Hauptrahmen (12) angeordnet sind, wobei eine Befestigungsplatte (45) quer zwischen den paarweise angeordneten Seitenrahmen (14) angeordnet ist, und wobei eine Halterung (46) mit den Enden der Hauptrahmen (12) verbunden ist, wobei der ebene Bereich (29e-3) mit der Befestigungsplatte (45) mittels einer Schraube, die in ein Befestigungsloch (35), das in dem ebenen Bereich (29e-3) angeordnet ist, eingesetzt ist, verbunden ist, und daß ein Flansch (42) mit der Halterung (46) mittels einer Schraube, die in das Befestigungsloch (43), das in dem Flansch (42) angeordnet ist, eingesetzt ist, verbunden ist.

17. Motorrad nach Anspruch 16, **dadurch gekennzeichnet**, daß verstärkende Seitenrohre (14) sich jeweils neben den Seitenwänden (29b-1; 29b-2) erstrecken und mittels einer äußeren Abdeckung (34) abgedeckt sind.

## Revendications

1. Motocycle comportant un compartiment à bagages (29) situé sous la selle (30) du motocycle et dans lequel une première partie (29a-1) de la paroi inférieure (29) dudit compartiment à bagages (29), par rapport au sens de la largeur dudit motocycle, est réalisée plate tandis qu'une deuxième partie (29a-2) de ladite paroi inférieure (29a) est réalisée sphérique afin de suivre la forme extérieure de casques de protection (28), **caractérisé par** une partie plane, globalement horizontale et peu profonde qui est formée dans une paroi avant (29e) dudit compartiment à bagages (29).

2. Motocycle selon la revendication 1, **caractérisé en ce que** lesdites première et deuxième parties (29a-1 ; 29a-2) correspondent respectivement à la moitié de la largeur totale de la paroi inférieure (29a).

3. Motocycle selon la revendication 1 ou 2, **caractérisé en ce que** ladite première partie (29a-1) de ladite paroi inférieure (29) se poursuit par une paroi latérale verticale haute (29b-1), en ce que ladite deuxième partie (29a-2) de ladite paroi inférieure (29) se continue par une paroi latérale verticale basse (29b-2), et en ce que, en outre, une paroi arrière (29d) et ladite paroi avant (29e) servent à définir un compartiment à bagages sensiblement en forme de boîte rectangulaire.

4. Motocycle selon la revendication 3, **caractérisé en ce que** ladite paroi arrière (29d) du compartiment à bagages (29) est constituée d'une partie large (29d-1), qui s'étend sur toute la largeur, et d'une partie étroite en pente (29d-2), qui relie ladite partie large (29d-1) à ladite première partie (29a-1) de la paroi inférieure (29a).

5. Motocycle selon la revendication 3 ou 4, **caractérisé en ce que** ladite paroi avant (29e) du compartiment à bagages (29) est constituée d'une partie large en gradin (29e-1), qui s'étend sur toute la largeur, et d'une partie en pente (29e-2), qui relie la partie (29e-1) à la première partie (29a-1) de la paroi inférieure (29a).

6. Motocycle selon la revendication 5, **caractérisé en ce que** ladite partie plane, globalement horizontale et peu profonde (29e-3) est formée sur la partie large (29e-1) de la paroi avant (29e) et en ce qu'elle comporte un trou de fixation (35).

7. Motocycle selon au moins l'une des revendications 1 à 6, **caractérisé en ce qu**'un carburateur (26) et/ou un filtre à air (25) est ou sont disposé(s) dans un espace situé au-dessous de ladite deuxième partie sphérique (29a-2) de ladite paroi inférieure (29a).

8. Motocycle selon au moins l'une des revendications 1 à 7, **caractérisé en ce que** des harnais de câbles passent dans un espace situé au-dessous de la première partie (29a-1) de la paroi inférieure (29a).

9. Motocycle selon au moins l'une des revendications 3 à 8, **caractérisé en ce que** la paroi avant (29e) comporte, au niveau de sa partie supérieure, une partie fixation (36) propre à recevoir une articulation (37), fixée sur la selle (30) afin de permettre une rotation libre de ladite selle (30) autour de ladite partie fixation de selle (36).

10. Motocycle selon la revendication 9, **caractérisé en ce que** ladite partie fixation de selle (36) comporte des surfaces d'appui (38), au moins l'une desdites surfaces d'appui (38) étant pourvue d'un élément de suspension (39) en forme de barrette et situé verticalement.

11. Motocycle selon la revendication 10, **caractérisé en ce que** lesdites surfaces d'appui (38) s'étendent obliquement en pente en direction de l'extérieur.

12. Motocycle selon la revendication 10 ou 11, **caractérisé en ce qu**'on prévoit, sur une plaque de fond (40) de la selle (30), au moins un évidement (49) pour loger lesdits éléments de suspension (39) lorsque la selle (30) est rabattue en position horizontale.

13. Motocycle selon l'une des revendications 1 ou 12, **caractérisé en ce que** des rebords conjugués droit et gauche (42) sont formés d'un seul tenant avec le bord arrière de l'ouverture du compartiment à bagages (29), chacun desdits rebords (42) étant pourvu d'un trou de fixation (43).

14. Motocycle selon l'une des revendications 1 à 13, **caractérisé en ce qu**'une matière de rembourrage (44) est appliquée sur la face interne du compartiment à bagages (29).

15. Motocycle selon la revendication 14, **caractérisé en ce que** ladite matière de rembourrage (44) est faite en un tissu non tissé.

16. Motocycle selon au moins l'une des revendications 13 à 15, **caractérisé en ce que** des cadres principaux conjugués (12) s'étendent obliquement vers l'arrière en remontant, en ce qu'ils sont coudés pour monter abruptement, et en ce qu'ils sont de nouveau coudés pour s'étendre obliquement vers l'arrière en remontant ; en ce qu'un tube transversal (13) est disposé latéralement entre les deux cadres principaux (12) ; des tubes latéraux de renfort (14) sont disposés entre le tube transversal (13) et les cadres principaux (12), une plaque de fixation (45) est latéralement disposée entre les cadres latéraux conjugués (14) et une équerre (46) est fixée aux extrémités des cadres principaux (12), la partie plate (29e-3) est fixée à la plaque de fixation (45) au moyen d'un boulon introduit dans un trou de fixation (35) situé dans ladite partie plate (29e-3) ; et en ce que le rebord (42) est fixé à l'équerre (46) au moyen d'un boulon introduit dans ledit trou de fixation (43) situé dans le rebord (42).

17. Motocycle selon la revendication 16, **caractérisé en ce que** lesdits tubes latéraux de renfort (14) s'étendent respectivement à côté desdites parois latérales (29b-1 ; 29b-2) et en ce qu'ils sont recouverts au moyen d'un capot extérieur (34).
